# EUROPÄISCHE PATENTANMELDUNG

(11) **EP 1 092 578 A2**
(43) Veröffentlichungstag der Anmeldung: **18.04.2001**
(21) Anmeldenummer: 00128385.2
(22) Anmeldetag: 25.02.1997
(51) Int. Cl.: B60J 7/12, B60R 21/13

(54) **Kinematisches Verdeck für Pkw**

(30) Priorität: 03.04.1996 DE 19613356
(62) Teilanmeldung aus: 97917239.2
(71) Anmelder: Wolfmaier, Christof, Prof. Dipl.-Ing., 73614 Schorndorf (DE)
(72) Erfinder: Wolfmaier, Christof, Prof.Dipl-Ing., 73614 Schorndorf (DE); Fröschle, Mathias, Dipl.-Ing(FH), 73760 Ostfildern (DE)
(74) Vertreter: Patentanwälte Rüger, Barthelt & Abel

(57) **Zusammenfassung**

Ein Verdeck (8) für ein Cabriolet (1) weist zwei an den Längsseiten verlaufende Dachrahmen (16,17) auf. Jeder dieser Dachrahmen ist in drei Abschnitte (18,19,21) aufgeteilt. Der hintere dieser Abschnitte ist mit einem Scharnier (23) an der Karosserie und mit einem weiteren Scharnier (24) mit dem mittleren Rahmenstück (19) verbunden. Die Anbindung des vorderen Rahmenstücks (21) an dem mittleren Rahmenstück (19) geschieht mit Hilfe einer Parallelogrammlenkeranordnung (27), die so gestaltet ist, daß beim Öffnen das vordere Rahmenstück (19) nach oben auf das mittlere Rahmenstück (19) geführt wird, damit auch beim geöffneten Verdeck (8) der Dachhimmel nicht exponiert ist.

## Beschreibung

Das Faltverdeck von PKW-Cabriolets und Roadstern soll sich möglichst einfach schließen und öffnen lassen. Im geöffneten Zustand soll es so wenig wie möglich Raum beanspruchen, denn der Stauraum für das Verdeck geht vom Platzangebot im Kofferraum ab.

Hinsichtlich des Platzverbrauches wäre zwar an sich eine einfache Persenning das günstigste, jedoch bereitet das Öffnen eines Persenning-Dachs verhältnismäßig viel Arbeit. Wesentlich günstiger hinsichtlich der Handhabung sind Verdecks mit Dachrahmen, die ein selbsttätiges Spannen des Verdecks beim Schließen und ein mehr oder weniger gut geordnetes Ablegen des Bezugs beim Öffnen gewährleisten.

Die leichte Handhabbarkeit darf allerdings nicht zu Lasten eines übermäßigen Gewichtes gehen, denn dann würde umgekehrt die Handhabbarkeit erheblich leiden.

Gleichgültig, wie der Dachrahmen gestaltet ist, muß gewährleistet sein, daß auch bei unachtsamer Handhabung keine Teile des Bezugs sich irgendwo in beweglichen Teilen des Dachrahmens einklemmen und durchgeschnitten werden.

Eine Dachrahmenkonstruktion, die hinsichtlich des technischen Aufwandes und der Bedienung recht günstig ist, besteht darin, den seitlichen Dachrahmen in mehrere Stücke zu gliedern, die untereinander durch Scharniere verbunden sind. Diese Scharnierverbindung ist bei kinematischen Verdecken von Cabriolets dann besonders vorteilhaft, wenn jeder der beiden seitlichen Dachrahmen in vier Stücke unterteilt ist. Beim Öffnen des Faltverdecks würde sich das Dach leporelloartig zusammenfalten, wobei jener Abschnitt des Verdecks, der im geschlosenen Zustand der Windschutzscheibe benachbart ist, bei geöffnetem Verdeck oben auf dem Stapel liegt, und zwar so, daß die Dachaußenseite ebenfalls nach außen zeigt. Hierdurch schützt im eingefalteten Zustand der oben liegende Verdeckabschnitt selbsttätig die darunter befindlichen Teile des gegenüber Verschmutzung verhältnismäßig empfindlichen Dachhimmels bzw. der Dachinnenseite.

Bei dieser Art von kinematischem Verdeck bleibt auch im geöffneten Zustand die Dachaußenseite außen am Verdeckpaket und beugt damit wirksam einer unerwünschten Verschmutzung des Dachhimmels vor.

Ungünstig insofern sind kinematische Verdecke, bei denen die Dachrahmen nur drei Abschnitte aufweisen. Ein solches Verdeck ist z.B. in "Halwart Schrader, Klassische Cabriolets aus acht Jahrzehnten", BLV Verlagsgesellschaft 1986, auf Seite 50 oder auf Seite 149 gezeigt. Bei einem solchen Verdeck gelangt beim Öffnen der vorderste, der Windschutzscheibe benachbarte Abschnitt mit der Dachhimmelseite nach außen auf das zusammengefaltete Verdeckpaket. Hierbei ist eine Verschmutzung des Dachhimmels im vorderen Bereich entsprechend dem vordersten Abschnitt des kinematischen Verdecks zwangsläufig vorprogrammiert. Mit Sicherheit wird dieser Abschnitt des Dachhimmels sich schneller verfärben als der restliche Teil. Bei geschlossenem Verdeck wird alsbald ein unschöner Streifen am Dachhimmel zu erkennen sein. Diese Verschmutzung wird dadurch begünstigt bzw. beschleunigt, daß der Benutzer es verabsäumt, bei geöffnetem Verdeck die Schutzplane über das Verdeckpaket zu ziehen, weil dies eine zusätzliche Arbeitsmaßnahme ist.

Solche dreigliedrigen Verdecke finden naturgemäß bei Fahrzeugen mit kurzem Dach Anwendung, wie dies für Kompaktfahrzeuge oder Roadster zutrifft.

In der WO 92/18343 ist ein Dach für ein Cabriolet beschrieben, das im Zusammenhang mit einem Überrollbügel zu verwenden ist. Das Faltverdeck weist je Fahrzeugseite einen Dachrahmen auf, der sich aus zwei Abschnitten zusammen setzt. Jeder Abschnitt enthält zwei Lenker, die jeweils ein Lenkervieleck bilden. Die Anordnung ist derart getroffen, dass beim Öffnen des Faltverdecks der Dachhimmel nach oben zeigend auf dem abgelegten hinteren Dachabschnitt zu liegen kommt. Auf diese Weise soll sicher gestellt sein, dass das Dach beim Öffnen nicht mit dem Überrollbügel kollidiert.

Ausgehend hiervon ist es Aufgabe der Erfindung, ein Cabrioletdach zu schaffen, das bei hoher Unfallsicherheit mit einer kleineren Anzahl von Spriegeln auskommt.

Diese Aufgabe wird erfindungsgemäß durch das PKW-Cabriolet mit den Merkmalen des Anspruches 1 gelöst. Im übrigen sind Weiterbildungen der Erfindung Gegenstand von Unteransprüchen.

Eine Vereinfachung des kinematischen Verdecks läßt sich erreichen, wenn der bei Cabriolets häufig ohnehin vorhandene Überrollbügel gleichzeitig die Funktion eines Spriegels erhält. Im geschlossenen Zustand wird der Bezug über den Überrollbügel gespannt, der den Bezug nach außen drückt.

Für den Fall, daß der Überrollbügel schmäler ist als das Dach, kann in dem Verdeck an dieser Stelle ein stabförmiges Austeifungselement eingesetzt werden, der das Verdeck seitlich des Überrollbügels infolge seiner Eigensteifigkeit aufgespannt hält. Ein seitliches Einfallen der Bezug im Bereich des Überrollbügels wird dadurch vermieden.

In der Zeichnung ist ein Ausführungsbeispiel des Gegenstandes der Erfindung dargestellt. Es zeigen:
Fig. 1 ein Cabriolet in einer perspektivischen Rückansicht schräg von oben,
Fig. 2 das in einer Zwischenstellung befindliche Gestell des kinematischen Verdecks des PKW nach Fig. 1, unter Weglassung des Bezugs, in einer perspektivischen Ansicht aus derselben Richtung wie Fig. 1 und
Fig. 3 und 4 unterschiedliche Stellungen des Gestells des kinematischen Verdecks des PKWs nach Fig. 1, in einer Seitenansicht.

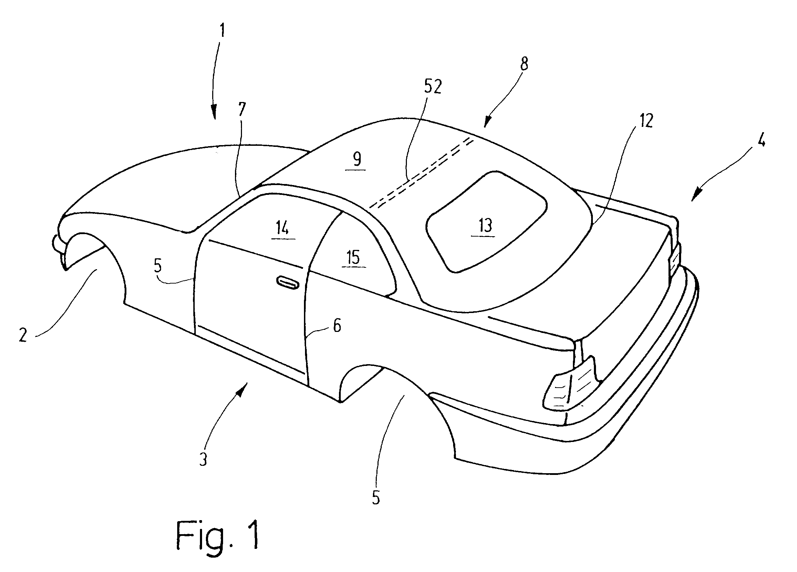

Fig. 1 zeigt schematisiert eine Karosserie für ein Cabriolet-Coupe. Die Karosserie weist einen Frontbereich 1 mit Radausschnitten 2 für Vorderräder, eine sich an den Frontbereich 1 anschließende Fahrgastzelle 3 sowie einen Heckbereich 4 auf. Im Übergang zwischen der Fahrgastzelle 3 und dem Heckbereich 4 befinden sich unten Radausschnitte 10 für Hinterräder.

Im Bereich der Fahrgastzelle 3 enthält die Karosserie einen Türausschnitt, dessen vorderes Ende von einer A-Säule 5 und der nach hinten von einer B-Säule 6 begrenzt ist. Die A-Säule 5 setzt sich nach oben in den Bereich einer Windschutzscheibe 7 fort, während die B-Säule auf der Höhe der Brüstung, d.h. unterhalb der Fensterkante aufhört.

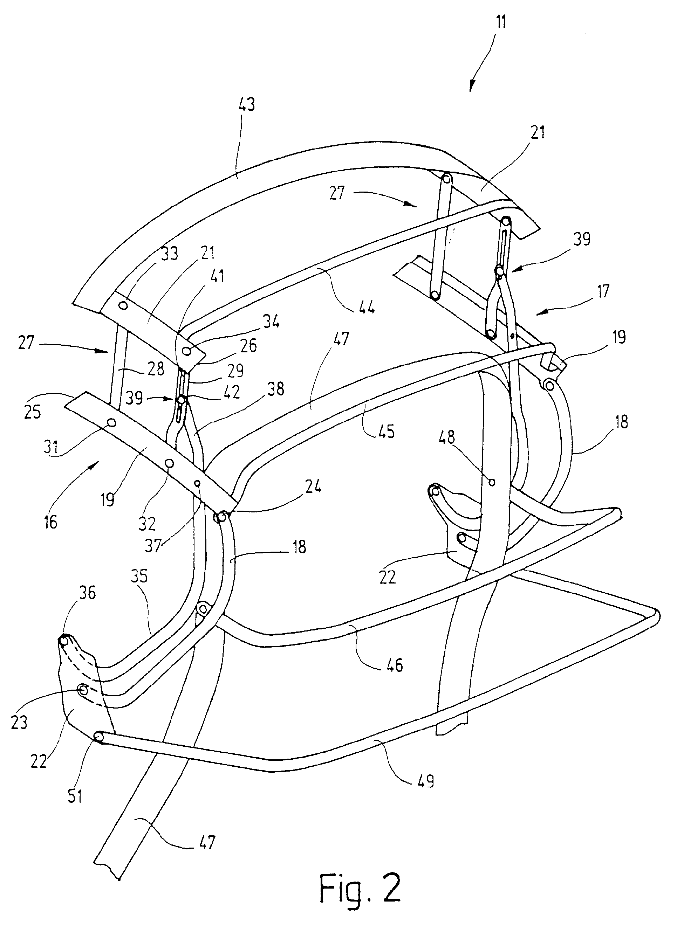

Die Fahrgastzelle 3 wird von einem kinematischen oder Faltverdeck 8 überdacht, dessen Bezug 9 in Fig. 1 zu erkennen ist, während Fig. 2 stark schematisiert das zu dem Faltverdeck 8 gehörende Gestell 11 veranschaulicht. Es ist in Fig. 2 in einer Zwischenstellung zwischen der vollständig geöffneten und der vollständig geschlossenen Stellung perspektivisch gezeigt.

Der Bezug 9 des kinematischen Verdecks 8 reicht von der Oberkante der Windschutzscheibe 7 bis zu einer hinteren Unterkante 12 des Verdecks 8, die die Lage der Brüstung im Heckbereich 4 wiedergibt. In einem Ausschnitt des Bezugs 9 befindet sich ein aus einem elastischen, durchsichtigen Material hergestelltes Rückfenster 13.

Seitlich reicht der Bezug 9 bis zu Oberkanten von Seitenfenstern 14 und 15.

Zu dem Gestell 11 gehören zwei seitliche Dachrahmen 16 und 17, die spiegelsymmetrisch gleich sind. Es genügt deswegen, einen der beiden Dachrahmen 16 bzw. 17 im einzelnen zu beschreiben. Die Erläuterung gilt sinngemäß auch für den jeweils anderen Dachrahmen 16, 17, wobei dessen Bauelemente mit denselben Bezugszeichen versehen sind.

Das Gestell 11 ist für ein Verdeck 8 mit einer ungeraden Anzahl von Abschnitten, im speziellen Fall mit drei Abschnitten, vorgesehen. Dementsprechend setzt sich der Dachrahmen 16, ebenso wie der Dachrahmen 17, aus drei Rahmenstücken 18, 19 und 21 zusammen. Diese Dachrahmen 16 und 17 verlaufen bei geschlossenem Verdeck 8 jeweils oberhalb der Oberkanten der Seitenfenster 14 und 15.

Im einzelnen ist die Anordnung wie folgt:

Etwa oberhalb des hinteren Radausschnittes 10 ist in der Karosserie ein Beschlag 22 befestigt, an dem mit einem Scharnier 23 das hintere Rahmenstück 18 anscharniert ist. Die Drehachse des Scharniers 23 liegt rechtwinklig zu der Fahrzeuglängsachse. Das hintere Rahmenstück 18 ist eine gekrümmte Strebe, die ungefähr der Kontur der hinteren Fensterkante des hinteren Seitenfensters 15 folgt. Etwa oberhalb einer Verlängerung der B-Säule 6 ist das hintere Rahmenstück 18 über ein Scharnier 24, das achsparallel zu dem Scharnier 23 ist, drehbar mit dem mittleren Rahmenstück 19 verbunden. Bei geschlossenem Verdeck verläuft dieses mittlere Rahmenstück 19 oberhalb der oberen Fensterkante des hinteren Seitenfensters 15 und des vorderen Seitenfensters 14. Das mittlere Rahmenstück 19 ist demzufolge wesentlich gestreckter als das hintere Rahmenstück 18. In einem entsprechenden Abstand von der Oberkante der Windschutzscheibe 7 endet das mittlere Rahmenstück 19 an einem Anschlag 25, der bei geschlossenem Verdeck 8 mit einem komplementären Anschlag 26 des vorderen Rahmenstücks 21 zusammenwirkt. Das vordere Rahmenstück 21 ist so bemessen, daß es von dem mittleren Rahmenstück 19 bis zu der oberen Kante der Windschutzscheibe 7 führt.

Das mittlere Rahmenstück 19 und das vordere Rahmenstück 21 sind durch eine Parallelogrammlenkeranordnung 27 miteinander verbunden. Diese Parallelogrammlenkeranordnung 27 umfaßt einen vorderen Parallelogrammlenker 28 sowie einen hinteren Parallelogrammlenker 29. Diese Parallelogrammlenker 28 und 29 haben etwa die gleiche Länge und sie sind an ihrem unteren Ende mit Scharnieren 31 und 32 drehbar mit dem mittleren Rahmenstück 16 verbunden. Die Achsen dieser Scharniere 31 und 32 sind parallel zu den Achsen der Scharniere 24 und 23.

Die oberen Enden der Lenker sind mit Hilfe weiterer, zu den vorgenannten Scharnieren achsparalleler Scharniere 33 und 34 an das vordere Rahmenstück 21 anscharniert.

Die Länge der Lenker 28 und 29 sowie die Lage der Scharniere 31 bzw. 32 auf dem mittleren Rahmenstück 19 als auch die Lage der Scharniere 33 und 34 auf dem vorderen Rahmenstück 21 sind so bemessen, daß bei geschlossenem Verdeck das vordere Rahmenstück 21 in Verlängerung des mittleren Rahmenstücks 19 verläuft, während gleichzeitig der Anschlag 26 an dem Anschlag 25 anliegt. Diese beiden Anschläge 25 und 26 sind etwas schräg gestellt, in der Weise, daß bei der Schließbewegung das von oben kommende vordere Rahmenstück 21 an dem Anschlag 25 einen Anschlag vorfindet, der eine nach unten gerichtete Bewegung blockiert.

Die Lenker 28 und 29 sind im übrigen so angebracht, daß sich das vordere Rahmenstück 21 durch einen Bereich bewegen kann, der sich oberhalb des Rahmenstückes 19 befindet, d.h. das Scharnier 33 beschreibt nicht ganz einen Halbkreis, der sich etwa zur Hälfte über dem mittleren Rahmenstück 19 befindet. Das Scharnier 34 beschreibt ebenfalls einen Halbkreis oberhalb des mittleren Rahmenstücks 19, jedoch ist dieser Halbkreis gegenüber dem erstgenannten nach rückwärts in Richtung auf das hintere Ende des Rahmenstücks 19 versetzt.

Um die Bedienung des Verdecks 8 zu vereinfachen, indem eine synchrone Bewegung der Rahmenstücke 18, 19 und 21 erfolgt, ist ein zweiarmiger Steuerhebel 35 vorgesehen. Ohne diesen Steuerhebel 35 ließe sich jedes der Rahmenstücke 18, 19 und 21 separat bewegen, ohne die Lage der übrigen Rahmenstücke zu verändern.

Der Steuerhebel 35 ist eine der Kontur des Rahmenstücks 18 folgende Strebe, die mittels eines Scharniers 36 an dem karosseriefesten Beschlag 22 anscharniert ist. Von hier aus verläuft der Steuerhebel 35 etwa parallel zu dem Rahmenstück 18 verlaufend bis zu dem mittleren Rahmenstück 19. An dem mittleren Rahmenstück 19 ist er zwischen dem Scharnier 32 und dem Scharnier 24 mittels eines Scharniers 37 anscharniert. Dadurch entsteht eine Art Parallelogrammlenker, der dazu dient, das mittlere Rahmenstück 19 an einem Herunterklappen nach unten zu hindern, sobald der Dachrahmen 16 - und entsprechendes gilt für den Dachrahmen 17-nicht mehr auf der Oberkante der Windschutzscheibe 7 aufliegt. Der Steuerhebel 35 verläuft zwischen dem Seitenfenster 15 und dem Rahmenstück 18.

Der Steuerhebel 35 ist über das Scharnier 37 nach oben hinaus verlängert und bildet dort einen Abschnitt 38, der über eine Kulissenführung 39 mit dem hinteren Lenker 29 verbunden ist. Die Kulissenführung 39 umfaßt ein Langloch 41, das sich in dem Lenker 29 in dessen Längsrichtung erstreckt sowie einen in das Langloch 41 hineinragenden Zapfen 42, der den komplementären Kulissenstein darstellt.

Anstelle der Kulissenführung 39 könnte auch ein Hebel verwendet werden, der zwischen dem Steuerhebel 35 und dem hinteren Lenker 29 angeordnet ist.

Wie bereits oben erwähnt, ist die Anordnung im Bereich des Dachrahmens 17 spiegelbildlich insofern, als dort die spiegelsymmetrische Lenkeranordnung 27 sowie der spiegelsymmetrische Steuerhebel 35 und der spiegelsymmetrische Beschlag 22 vorhanden sind.

Im übrigen sind sämtliche der erwähnten Scharniere, die die Dachrahmenabschnitte 18, 19 und 21 untereinander bzw. mit den Lenkern 28, 29 und dem Steuerhebel 35 verbinden, zueinander achsparallel und die Achsen der linken Seiten fluchten mit den Achsen der rechten Seite des Gestells 11.

Um den Bezug 9 möglichst straff und ausgesteift zu halten, sind die beiden vorderen Rahmenstücke 21 an der linken und der rechten Seite mittels eines querverlaufenden Spriegels 43 starr miteinander verbunden. Dieser Spriegel 43 trägt gleichzeitig die Verriegelungsglieder, und zwar in bekannter Ausführung, die dazu dienen, das aufgespannte Verdeck 8 an der Oberkante der Windschutzscheibe 7 zu verriegeln. Ein weiterer Spriegel 44 verbindet unbeweglich die beiden vorderen Rahmenstücke 21 in der Nähe von deren näherem Scharnier 34.

Der Bereich der Lenkeranordnung 29 ist bei den Rahmenstücken 19 frei von Spriegeln. Diese mittleren Rahmenstücke 19 sind erst wieder in der Nähe des unten liegenden Scharnieres 24 mit Hilfe eines Spriegels 45 miteinander starr verbunden.

Je nach Ausführungsform des Fahrzeugs können weitere Spriegel an den beiden hinteren Rahmenstücken 18 vorgesehen sein. Das gezeigte Verdeck 8 ist allerdings für ein Coupé oder ein Fahrzeug mit ähnlich kurzer Fahrgastzelle vorgesehen. Bei einer kurzen Fahrgastzelle ist es vorteilhaft, wenn die weiteren Spriegel zum Aussteifen des Bezugs 9 nicht mit den beiden Dachrahmen 16 und 17 verbunden sind. Bei der gezeigten Ausführungsform ist ein weiterer Spriegel 46 an einem Überrollbügel 47 mit Hilfe von Scharnieren 48 anscharniert. Der Überrollbügel 47 ist in der Karosserie starr verankert.

Schließlich weist das Verdeck 8 auf der Höhe der Brüstung einen letzten oder unteren Spriegel 49 auf, der ebenfalls mit Hilfe von Scharnieren 51 an dem Beschlag 22 angelenkt ist.

Während die Spriegel 43, 44 und 45 praktisch gerade bzw. nur leicht bombiert sind, sind die Spriegel 46 und 49 deutlich U-förmig gestaltet, damit ihr parallel zur Dachfläche verlaufender Teil einen genügenden Abstand von den betreffenden Scharnieren 48 bzw. 51 bekommt.

Es versteht sich, daß das Gestell 11 bei der praktisch ausgeführten Form des Verdecks 8 zweckmäßigerweise zwischen dem äußeren wasserdichten Bezug 9 und einem Dachhimmel, der in den Figuren nicht erkennbar ist, eingebettet ist. Außerdem ist zumindest der Bezug 9 in bekannter Weise an geeigneten Stellen mit den Spriegeln und den Dachrahmen 16 bzw. 17 verbunden; bei all diesen Teilen sind der Übersichtlichkeit halber die Verankerungsstellen zum Anbringen des Bezugs 9 nicht veranschaulicht, denn sie sind für das Verständnis der Erfindung nicht notwendig und würden die Zeichnungen nur mit Details überladen.

Bei dem neuen Verdeck 8 wird im übrigen noch der Überrollbügel 47 als Spriegel zum Aussteifen des Verdecks 8 herangezogen, und zwar der obere, querverlaufende Teil des Überrollbügels 47. Da dieser sich innerhalb der beiden Dachrahmen 16 und 17 befindet, um die Öffnungs- und Schließbewegung des Verdecks 8 nicht zu behindern, ist sein querverlaufender Teil kürzer als die Spriegel bzw. die erforderliche Breite des Verdecks 8. Um ein seitliches Einfallen des Bezugs 9 auch an dieser Stelle zu verhindern, ist an dem Bezug 9 ein stabförmiges Aussteifungglied 52 befestigt, das in Fig. 1 durch gestrichelte Linien angedeutet ist. Das stabförmige Aussteifungsglied 52 legt sich bei geschlossenem Verdeck auf den querverlaufenden Teil des Überrollbügels 47 auf und stützt damit die seitlich über den Überrollbügel 47 überstehenden Teile des Bezugs 9.

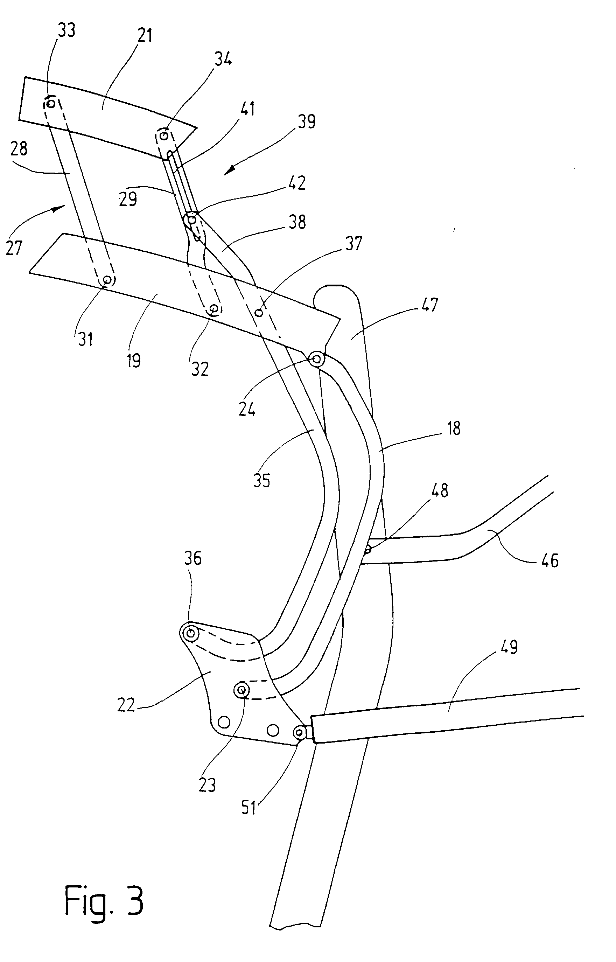

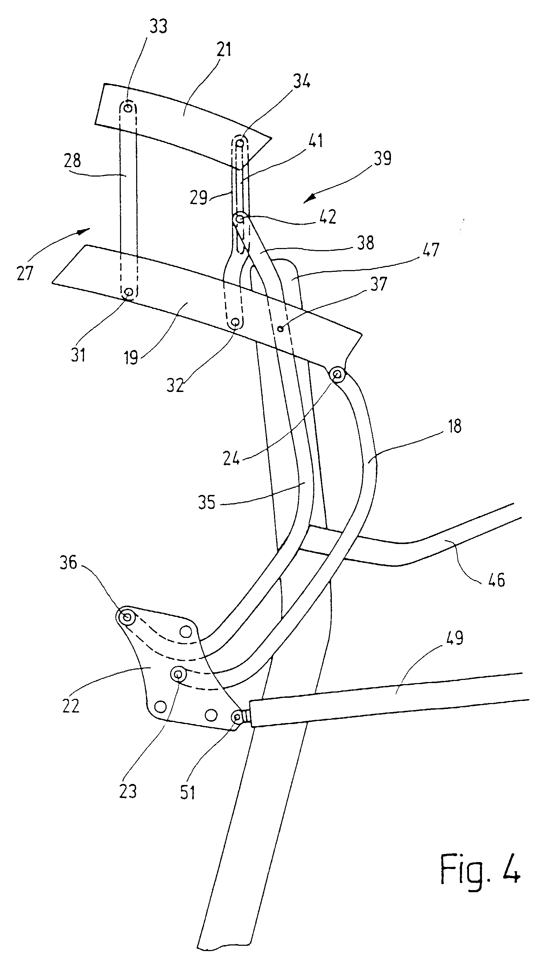

Die Fig. 3 und 4 zeigen in einer Seitenansicht auf die linke Seite des Gestells 11 die Rahmenstücke 18, 19 und 21 sowie die zugehörigen Hebel, in unterschiedlichen Öffnungsstellungen.

Zur Erläuterung der Kinematik des neuen Verdecks 8 sei angenommen, es befinde sich in der geschlossenen Stellung nach Fig. 1. In dieser Position ist der vordere Spriegel 43 mit Hilfe von Verriegelungsgliedern an der Oberkante der Windschutzscheibe 7 verriegelt. Der vordere Rahmenabschnitt (Rahmenstück 21) verläuft in glatter stufenfreier Fortsetzung des mittleren Rahmenstückes 19, wobei der Anschlag 26 an dem Anschlag 25 anstößt. Das Zusammenwirken dieser Anschläge 25 und 26 verhindert, daß das vordere Rahmenstück 21 gegenüber dem mittleren Rahmenstück 19 nach unten gedrückt werden kann, d.h. das vordere Rahmenstück 21 gleichsam um das mittlere Rahmenstück 19 herum nach unten geführt werden kann. Die beiden Lenker 28 und 29 der Parallelogrammlenkeranordnung 27 liegen fast parallel zu dem mittleren und dem vorderen Rahmenstück 19 und 21. Durch entsprechendes, in den Zeichnungen nicht weiter erkennbares Kröpfen wird verhindert, daß der hintere Lenker 29 mit dem Scharnier 31 kollidiert. In dieser Stellung ist die Verbindung zwischen dem vorderen und dem mittleren Rahmenstück 21 bzw. 19 im Bereich der aneinander anliegenden Anschläge 25 und 26 drucksteif bezüglich Kräften, die an dieser Verbindungsstelle senkrecht von oben nach unten wirken.

Die beiden Rahmenstücke 19 und 21 folgen bei geschlossenem Verlauf im wesentlichen der Kontur der Oberkante der beiden Seitenfenster 14 und 15. Dort, wo die Oberkante des hinteren Seitenfensters 15 beginnt deutlich nach unten in Richtung Brüstung abzusteigen, liegt ungefähr das Scharnier 24 bzw. das Scharnier 37. Der Steuerhebel 35 und das hintere Rahmenstück 18 folgen gegenüber der entsprechenden Fensterkante des hinteren Seitenfensters 15 zurückversetzt dessen Außenkontur.

Der Bezug 9 wird zwischen dem Spriegel 43 und dem Spriegel 49 straff gespannt gehalten, wobei es, ausgehend von der Windschutzscheibe 7, zunächst von dem Spriegel 43, sodann dem Spriegel 44, darauffolgend von dem Spriegel 45 in Querrichtung ausgesteift wird. Die nächste Aussteifung ist das Aussteifungsglied 52, das auf dem Überrollbügel 47 aufliegt. Sodann folgt oberhalb des Heckfensters 13 die Aussteifung durch den Spriegel 46, der an dem Überrollbügel 47 anscharniert ist und schließlich auf der Höhe der Brüstung längs der Konturlinie 12 durch den Spriegel 49.

Bei geschlossenem Verdeck 8 läßt sich der gelenkig anscharnierte Spriegel 49 gegenüber der Brüstung des Heckbereiches 4 anheben, indem an der Innenseite entsprechende, nicht gezeigte Verriegelungsglieder geöffnet werden. Dadurch wird von außen her der Raum im Bereich der "Hutablage" zugänglich. In diesem Bereich wird bei einem Cabriolet das zusammengefaltete Verdeck untergebracht. Aufgrund der beweglichen Anbringung des Spriegels 49 ist dieser Stauraum für das Verdeck 8 von außen zugänglich und kann bei geschlossenem Verdeck 8 als gesonderter Stau- oder Gepäckraum verwendet werden, der leicht von außen zu erreichen ist.

Zum Öffnen des Verdecks werden zunächst die Verriegelungsglieder geöffnet, die den Spriegel 43 mit der Oberkante der Windschutzscheibe 7 formschlüssig verbinden. Sodann kann das Verdeck 8 an diesem Spriegel 43 angefaßt und nach hinten in Richtung auf seinen Stauraum bewegt werden. Dabei falten sich die beiden Rahmenstücke 18 und 19 an dem Scharnier 24 zusammen, wobei ein Abstürzen des mittleren Rahmenstücks 19 von dem unteren Teil des Steuerhebels 35 verhindert wird, der wie ein Parallelogrammlenker wirkt. Beim Einfalten des Verdecks 8 schwenkt bei der gezeigten Darstellung - die Fig. 3 und 4 zeigen eine Ansicht auf die linke Fahrzeugseite - das hintere Rahmenstück 18 im Uhrzeigersinn um sein Scharnier 23 nach hinten. Eine dazu parallele oder gleichgerichtete Bewegung macht auch der Steuerhebel 35 in seinem unteren Bereich, jedoch um das Scharnier 36. Diese Rückführbewegung des hinteren Rahmenstücks 18 führt zu einer klappenartigen Schließbewegung zwischen dem Rahmenstück 18 und dem Rahmenstück 19.

Infolge der dadurch auftretenden, nach rechts im Uhrzeigersinne gerichteten Relativdrehung zwischen dem Steuerhebel 35 und dem Rahmenabschnitt 19 hebt sich dessen vorderer Abschnitt 38 aus einer Lage, in der er im wesentlichen parallel zu dem mittleren Rahmenabschnitt verlaufen ist, allmählich nach oben. Da zwischen dem Steuerhebel 35 und dem hinteren Lenker 29 eine Verbindung infolge der Kulissenführung 39 besteht, wird auch der Lenker 29 zunehmend aufgerichtet, d.h. er wird ausgehend von seiner Stellung, in der er von dem mittleren Rahmenabschnitt 19 in Richtung auf die Oberkante der Windschutzscheibe 7 gezeigt hat, zunächst in eine Stellung gebracht, in der er schräg nach vorne zeigt, von dieser bei einer weiteren Bewegung in eine Stellung gebracht, in der er praktisch senkrecht nach oben zeigt, wie dies die zwei Phasen gemäß den Fig. 3 und 4 zeigen.

Der zweite Lenker 28 erzwingt bei dieser Schwenkbewegung des Lenkers 29 im wesentlichen eine Parallelverschiebung des vorderen Rahmenstücks 21 gegenüber dem mittleren Rahmenstück 19, so daß seine Unterseite nicht aufhört nach unten zu zeigen, während das vordere Rahmenstück 21 aus einer Position in Verlängerung des Rahmenstücks 19 in eine Position oberhalb des Rahmenstücks 19 überführt wird. Die Fig. 3 und 4 zeigen, wie sich zunehmend beim Öffnen des Verdecks 8 das Rahmenstück 21 über das Rahmenstück 19 bewegt.

In der voll geöffneten Stellung liegt das hintere Rahmenstück 18 in dem in der Karosserie dafür vorgesehenen Stauraum, d.h. das Rahmenstück 18 zeigt etwa auf Höhe der Brüstung nach hinten. Das mittlere Rahmenstück 19 liegt auf dem Rahmenstück 18 auf. Hierdurch zeigt die Dachinnenseite im Bereich des Rahmenstücks 18 nach oben, während die Dachinnenseite im Bereich des Rahmenstücks 19 nach unten weist und den nach oben gerichteten Abschnitt des Dachhimmels schützt. Diese Stellung ist nicht zeichnerisch dargestellt, weil die ineinader liegenden Lenker und Hebel in der Zeichnung nicht mehr klar unterscheidbar wären.

Auf der Oberseite des Rahmenstücks 19 liegt schließlich das Rahmenstück 21 mit seiner Unterseite auf. Zufolge einer entsprechenden Anbringung des Bezugs 9 bzw. des Dachhimmels, liegt der Bezug 9 in dem Bereich zwischen den beiden Rahmenabschnitten 19 und 21 zickzack gefaltet. Demzufolge bleibt der nach außen zeigende Teil des Bezugs 9 zwischen den Spriegeln 43 und 44 auch beim geöffneten Verdeck 8 oben außen auf dem Paket des eingefalteten Verdecks 8 und schützt sämtliche darunter liegenden Teile des geöffneten Verdecks 8.

Beim Öffnen des Verdecks 8 sorgt der Steuerhebel 35 dafür, daß der vordere Rahmenabschnitt 21 korrekt abgelegt wird, wenn die beiden Rahmenabschnitte 18 und 19 an dem Scharnier 24 einknicken.

Beim Schließen des Verdecks 8 erfolgt sinngemäß die umgekehrte Bewegung, bis die eingangs beschriebene Stellung erreicht ist.

Je nachdem, wie groß die Lagerluft der einzelnen Scharniere ist, kann es zweckmäßig sein, im Bereich zwischen den beiden Anschlägen 25 und 26 noch eine nicht gezeigte Verriegelungseinrichtung anzubringen, die bei geschlossenem Verdeck 8 eine schwingende Relativbewegung zwischen den Rahmenstücken 19 und 21 mit Sicherheit verhindert.

Aus der Figurenbeschreibung wird weiter klar ersichtlich, daß die gezeigte Konstruktion für jede Art von kinematischen Verdecken in Frage kommt, die eine ungerade Anzahl von Verdeckabschnitten aufweist, an denen eine Einfaltbewegung zustandekommt. Wesentlich ist dabei lediglich, daß die vorderen drei Abschnitte, wie in den Figuren dargestellt, ausgeführt sind. Die weiteren zwei Abschnitte können beispielsweise bei einem fünfteiligen Verdeck wiederum einfach mit Scharnieren miteinander und mit dem hinteren Rahmenabschnitt 18 verbunden sein.

Ein Verdeck für ein Cabriolet weist zwei an den Längsseiten verlaufende Dachrahmen auf. Jeder dieser Dachrahmen ist in drei Abschnitte aufgeteilt. Der hintere dieser Abschnitte ist mit einem Scharnier an der Karosserie und mit einem weiteren Scharnier mit dem mittleren Rahmenstück verbunden. Die Anbindung des vorderen Rahmenstücks an dem mittleren Rahmenstück geschieht mit Hilfe einer Parallelogrammlenkeranordnung, die so gestaltet ist, daß beim Öffnen das vordere Rahmenstück nach oben auf das mittlere Rahmenstück geführt wird, damit auch beim geöffneten Verdeck der Dachhimmel nicht exponiert ist.

## Patentansprüche

1. PKW-Cabriolet mit einer Karosserie, die A-Säulen (5), zwischen denen sich ein Windschutzscheibe (7) erstreckt, in Karosserieauschnitten befindliche Türen und einen Heckbereich (4) sowie ein kinematisches faltbares Verdeck (8) aufweist, wobei sich zwischen den Türen und dem Heckbereich (4) B-Säulen (6) erheben und der Heckbereich (4) nach oben an einer Brüstung (12) endet,
mit zwei an der Karosserie anscharnierten Dachrahmen (16,17), die bei geschlossenen Verdeck (8) von dem Heckbereich (4) mit Abstand voneinander zu der Windschutzscheibe (7) führen und zueinander spiegelsymmetrisch sind, wobei jeder Dachrahmen (16,17) in eine Anzahl von Rahmenstücken (18,19,21) aufgeteilt ist, die miteinander verbunden sind,
mit wenigstens einem zwischen den Dachrahmen (16,17) sich erstreckenden Spriegeln (43,44,45)
mit einem mit den Dachrahmen (16,17) verbunden Bezug (9) und
mit einem starr mit der Karosserie verbundenen Überrollbügel (47), der bei geschlossenem Verdeck (8) einen Spriegel für das Verdeck (8) bildet.

2. PKW-Cabriolet nach Anspruch 22, dadurch gekennzeichnet, daß mit dem Bezug (9) wenigstens ein Aussteifungsglied (52) verbunden ist.

3. PKW-Cabriolet nach Anspruch 23, dadurch gekennzeichnet, daß sich das Aussteifungsglied (52) an einer Stelle befindet, derart, daß es bei geschlossenem Verdeck (8) auf dem Überrollbügel (47) aufliegt.
